(19) **Europäisches Patentamt**

**European Patent Office**

**Office européen des brevets**

(11) Veröffentlichungsnummer : **0 308 454 B1**

(12) # EUROPÄISCHE PATENTSCHRIFT

(45) Veröffentlichungstag der Patentschrift :
25.09.91 Patentblatt 91/39

(21) Anmeldenummer : 88902833.8

(22) Anmeldetag : 17.03.88

(86) Internationale Anmeldenummer :
PCT/EP88/00217

(87) Internationale Veröffentlichungsnummer :
WO 88/07653 06.10.88 Gazette 88/22

(51) Int. Cl.⁵ : **F25B 37/00, F25B 33/00,**
**// B01D1/06, B01D19/00,**
**B01D53/18**

(54) **VORRICHTUNG ZUM VERDAMPFEN VON FLÜSSIGKEITEN BZW. ABSORBIEREN ODER ENTGASEN VON ZWEI- ODER MEHRSTOFF-LÖSUNGEN IN INNENROHR-FALLFILM-BAUWEISE.**

(30) Priorität : 24.03.87 DE 3709652

(43) Veröffentlichungstag der Anmeldung :
29.03.89 Patentblatt 89/13

(45) Bekanntmachung des Hinweises auf die
Patenterteilung :
25.09.91 Patentblatt 91/39

(84) Benannte Vertragsstaaten :
AT BE CH FR GB IT LI NL SE

(56) Entgegenhaltungen :
SU-A- 176 561
US-A- 242 329

(73) Patentinhaber : TCH
THERMO-CONSULTING-HEIDELBERG GMBH
Im Neuenheimer Feld 517
W-6900 Heidelberg 1 (DE)

(72) Erfinder : MUC IC , Vinko
Finkenweg 1A
W-6906 Walldorf (DE)
Erfinder : THIEME, Kurt
Auf der Höhe 54
W-5060 Bergisch-Gladbach 1 (DE)
Erfinder : ENGELMANN, Jürgen
Holzbachtalstra e 79
W-5063 Overath-Steinenbrück (DE)

(74) Vertreter : Helber, Friedrich G., Dipl.-Ing. et al
Zenz, Helber & Hosbach Scheuergasse 24
W-6144 Zwingenberg (DE)

EP 0 308 454 B1

## Beschreibung

Die Erfindung betrifft eine Vorrichtung zum Verdampfen von Flüssigkeiten bzw. Absorbieren oder Entgasen von Zwei- oder Mehrstoff-Lösungen mit einem allseitig geschlossenen, mit wenigstens je einem Ein- und einem Auslaß für die Durchströmung mit einem wärmeübertragenden Strömungsmedium versehenen stehenden Druckbehälter, dessen Inneres von einer Vielzahl von voneinander beabstandeten parallelen senkrechten Rohren durchsetzt wird, deren Enden derart abgedichtet durch je eine den Druckbehälter bodenseitig und an der Oberseite abschließende horizontale Querwand hindurchgeführt sind, daß sie in einer bodenseitig und an der Oberseite druckdicht auf dem Druckbehälter angeordneten Tasse münden, wobei die oberen Enden der Rohre jeweils um das gleiche Maß über die Oberseite der oberen horizontalen Querwand in die Tasse vorstehen und an der oberen Tasse ein Einlaß für Flüssigkeit bzw. Lösung und ein Anschluß für die Zu- bzw. Abfuhr verdampfter Flüssigkeit bzw. gasförmiger Lösungkomponente und an der unteren Tasse ein Auslaß für Flüssigkeit bzw. flüssige Lösung vorgesehen ist, und mit Abstand über den oberen Mündungen der Rohre und unterhalb des Einlasses für die Flüssigkeit bzw. Lösung eine zur oberen Querwand des Druckbehälters parallele Trennwand in die obere Tasse eingesetzt ist, in welcher eine Vielzahl von zu den Mündungen der Rohre versetzten Bohrungen geringen Durchmessers und fluchtend zu den oberen Mündungen der Rohre Öffnungen vorgesehen sind, in die jeweils abgedichtet das untere Ende von sich in den oberhalb der Trennwand liegenden Raum der oberen Tasse erstreckenden Rohrabschnitten eingesetzt ist, und wobei auf der Oberseite der durchbohrten Trennwand eine im wesentlichen parallel zu und in geringem Abstand von der Innenfläche der Tasse angeordnete ringsum geschlossene Ringwand dicht aufgesetzt ist, und in dem zwischen der Innenfläche der Tasse und der Außenfläche der Ringwand gelegenen ringförmigen Bereich der Trennwand keine Bohrungen vorgesehen sind.

Bekannte Vorrichtungen zum Verdampfen (DE-AS 1121588) dienen beispielsweise zum Eindampfen von Flüssigkeiten, wie Milch oder Fruchtsäften, die also durch Verdampfen eines Teils ihres Wassergehalts aufkonzentriert werden sollen, wobei es zur Erzielung einer optimalen Eindampfung auf eine gleichmäßige Verteilung der einzudampfenden Flüssigkeit in den Fallrohren ankommt. Außerdem sind zur Eindickung von Zuckersaft vorgesehene ähnlich aufgebaute FallstromVerdampfer in der Zuckerindustrie bekannt (DE-GM 1992031).

Wenn solche Vorrichtungen als Verdampfer bzw. als Resorber oder Entgaser in Kompressions-Wärmepumpensystemen eingesetzt werden, sammelt sich die in die obere Tasse eingebrachte Flüssigkeit oder Lösung auf der oberen Querwand des Druckbehälters und bildet dort einen Überströmsee mit einer dem Überstand der den Druckbehälter durchsetzenden Rohre über die obere Querwand entsprechenden Tiefe, aus welchem die Flüssigkeit oder Lösung in die Mündung dieser Rohre eintritt und dann unter dem Einfluß der Schwerkraft in einem dünnen Film auf den Rohr-Innenflächen in die untere Tasse hinabfließt. Je nach der Temperatur des den Druckbehälter durchströmenden Strömungsmediums wird dann durch die Wandung der senkrechten Rohre hindurch Wärme in den Flüssigkeitsfilm übertragen oder aus ihm abgeführt und so entweder Flüssigkeit aus dem Film verdampft bzw. Lösung entgast oder — durch die Abkühlung — gleichzeitig durch die Rohre strömende gasförmige Lösungskomponente absorbiert. Aufgrund der geschilderten speziellen Ausgestaltung und Funktion werden diese Vorrichtungen auch als "InnenrohrFallfilm-Apparate" bezeichnet. Bei den im Zusammenhang mit Kompressions-Wärmepumpensystemen verwendeten Vorrichtungen tritt die Flüssigkeit bzw. Lösung aus dem Tassen-Einlaß direkt in den Überlaufsee ein. Aufgrund der dabei im Überlaufsee entstehenden Strömung kommt es zu einem ungleichmäßigen Überlauf in die Rohrmündungen, was unterschiedliche Filmdicken in den einzelnen Rohren und dadurch ungleichmäßige Verdampfungs- bzw. Entgasungs- oder Absorptions-Leistungen in den einzelnen Rohren und somit einen verringerten Wirkungsgrad zur Folge hat. Außerdem besteht bei Verdampfern oder Entgasern, bei denen die verdampfte Flüssigkeit bzw. die aus der Lösung ausgetriebene gasförmige Komponente entgegen der Strömungsrichtung des Films nach oben abgesaugt wird, außerdem die Gefahr, daß Flüssigkeit oder flüssige Lösung in Form von Tröpfchen oder Nebel in den Kompressor mitgerissen wird, sofern dem Kompressor kein Flüssigkeitsabscheider vorgeschaltet wird.

Gegenüber den vorstehend beschriebenen Vorrichtungen wurde bereits eine Vergleichmäßigung der Filmdicke der zu behandelnden Flüssigkeit in den den Druckbehälter durchsetzenden Rohre bei einer bekannten Vorrichtung (SU-A 176561) erreicht, bei welcher die zu behandelnde Flüssigkeit nicht direkt in den Überlauf, sondern einen vorgeschalteten Beruhigungssee eintritt.

Der Erfindung liegt die Aufgabe zugrunde, diese bekannte Vorrichtung einerseits bezüglich der Ausbildung einer gleichmäßigen Filmdicke der in den Rohren strömenden Behandlungs-Flüssigkeit weiter zu optimieren, wobei beim Einsatz als Verdampfer bzw. Entgaser zusätzlich erreicht werden soll, daß in der abgesaugten, aus der Flüssigkeit verdampften bzw. der Lösung ausgetriebenen gasförmigen Komponente keine flüssigen Bestandteile mehr enthalten sind, welche einen ohne Flüssigkeitsabscheider nachgeschalteten Kompressor schädigen könnten.

Ausgehend von einer Vorrichtung der eingangs erwähnten Art wird diese Aufgabe dadurch gelöst, daß mit Abstand oberhalb der durchbohrten Trennwand und oberhalb des Einlasses für die Flüssigkeit bzw. Lösung und unterhalb des Anschlusses für die Zu- oder Abfuhr verdampfter Flüssigkeit bzw. gasförmiger Lösungskomponente in die Tasse eine weitere Trennwand mit Öffnungen eingesetzt ist, in welche die oberen Enden der den zwischen den beiden Trennwänden gebildeten Zwischenraum durchsetzenden Rohrabschnitte abgedichtet eingesetzt sind, und daß die Höhe der ringsum geschlossenen Ringwand geringer als der zwischen der weiteren Trennwand und der unteren durchbohrten Trennwand gemessenen lichten Höhe ist. Die die oberen Enden der Rohrabschnitte abgedichtet aufnehmende dritte Trennwand dient nicht nur zur mechanischen Halterung der Rohrabschnitte, sondern verhindert beim Betrieb als Absorber, daß das in die Tasse einströmende Gas auf die Oberfläche des Beruhigungssees auftrifft und dadurch zur Strömungsausbildung oder zum Aufwühlen des Beruhigungssees Anlaß gibt.

Die bei Anwendung der Vorrichtung als Verdampfer oder Entgaser aus der Lösung ausgetriebene und nach oben abgesaugte gasförmige Komponente tritt außerdem aus den oberen Mündungen der den Druckbehälter durchsetzenden senkrechten Fallrohre direkt in die zu ihnen ausgerichteten unteren Mündungen der abgedichtet durch die untere und obere zusätzliche Trennwand geführten Rohr abschnitte, d.h. wird hermetisch vom Beruhigungssee getrennt geführt, wodurch ein Mitreißen von Flüssigkeit oder flüssiger Lösung in Form von Tröpfchen oder Nebel in einen nachgeschalteten Kompressor vermieden wird.

Auf der Oberseite der unteren durchbohrten Trennwand ist eine im wesentlichen parallel zu und in geringem Abstand von der Innenfläche der Tasse angeordnete ringsum geschlossene Ringwand dicht aufgesetzt, deren Höhe geringer als die zwischen den beiden Trennwänden gemessene lichte Höhe des Zwischenraums ist, und in dem zwischen der Innenfläche der Tasse und der Außenfläche der Ringwand gelegenen ringförmigen Bereich der unteren Trennwand sind keine Bohrungen vorgesehen. Die in den oberhalb des ringförmigen Bereichs gebildeten Ringraum eingeführte Flüssigkeit bzw. Lösung muß also zunächst über den oberen Rand der Ringwand hinweg in den eigentlichen, über dem durchbohrten Bereich der unteren Trennwand gebildeten Beruhigungssee treten. Die Umlenkung des Flüssigkeits- bzw. Lösungszustroms über die obere Kante der Ringwand zum Beruhigungssee hat zur Folge, daß auch in diesem die Bildung von Wirbelströmungen vermieden werden, welche zu einer ungleichmäßigen Strahldicke der in den Überlaufsee übertretenden Strahlen führen könnten.

Wenn die erfindungsgemäße Vorrichtung als Absorber oder Resorber — beispielsweise in einem Wärmepumpensystem — vorgesehen ist, d.h. die innerhalb der Fallrohre in der Lösung zu resorbierende, gasförmige Lösungskomponente vom oberen Ende der Tasse her durch die den Zwischenraum zwischen den Trennwänden durchsetzenden Rohr abschnitte zugeführt wird, ist die Ausgestaltung zweckmäßig so getroffen, daß die den Zwischenraum zwischen den in der oberen Tasse vorgesehenen Trennwänden durchsetzenden Rohr abschnitte zumindest in ihrem unteren Endbereich einen Außendurchmesser haben, der kleiner als der lichte Innendurchmesser der über die obere Querwand vortretenden Rohre in deren Mündungsbereich ist, und daß die den Zwischenraum der Tasse durchsetzenden Rohr abschnitte durch die untere durchbohrte Trennwand hindurch bis in den jeweils mit ihnen fluchtenden Mündungsbereich der von der oberen Querwand vortretenden Rohre geführt sind. Damit wird eine Aufteilung der gasförmigen Komponente in den in den einzelnen Fallrohren strömenden Lösungsfilmen zugeordnete gleiche Menge erreicht, wodurch die angestrebte Vergleichmäßigung der Absorption erreicht wird. Gegenüber einem Einblasen der gasförmigen Lösungskomponente in den Raum über dem Überlaufsee hat die direkte Einfuhr der gasförmigen Komponente in die Mündungen der Fallfilm-Rohre den Vorteil, daß es zu keiner Beunruhigung des Spiegels des Überlaufsees durch die Strömung der gasförmigen Komponente kommen kann.

Wenn die erfindungsgemäße Vorrichtung als Entgaser oder Verdampfer eingesetzt werden soll, d.h. wenn die in den Fallrohren ausgetriebene gasförmige Lösungskomponente bzw. verdampfte Flüssigkeit am oberen Ende der Tasse von einem Kompressor abgesaugt wird, enden die den Zwischenraum zwischen den Trennwänden durchsetzenden Rohr abschnitte dagegen zweckmäßig bündig mit der unteren Trennwand. Aus der in den Beruhigungssee eingebrachten Lösung gast in gewissem Umfange bereits Lösungskomponente aus bzw. verdampft Flüssigkeit. Zweckmäßig ist die obere Tasse deshalb in ihrem unmittelbar unter der oberen Trennwand gelegenen Bereich mit einem zusätzlichen Auslaß versehen, der über eine Leitung mit einem weiteren Anschluß an der unteren Tasse verbunden ist. Die aus dem Beruhigungssee ausgegaste Lösungskomponente — oder verdampfte Flüssigkeit — wird also in die untere Tasse abgesaugt und tritt dann im Gegenstrom zum Fallfilm der Lösung durch die den Druckbehälter durchsetzenden Rohre nach oben. Diese Absaugung der aus der Lösung ausgetriebenen gasförmigen Lösungskomponenten aus der oberen Tasse hat auch zur Folge, daß innerhalb der Fallfilm-Rohre in die gasförmige Komponente übergetretene flüssige Lösung in Form kleiner und kleinster Tropfen unter dem Einfluß der Schwerkraft wieder ausgeschieden wird. Die abgesaugte gasförmige Lösungskomponente ist also weitgehend frei von flüssiger Lösung, so daß die bei den bekannten Vorrichtungen erforderlichen Flüssigkeitsabscheider entweder vollständig entfallen oder durch

3

Flüssigkeitsabscheider geringerer Kapazität ersetzt werden können.

Um das Mitreißen von flüssiger Lösung in Form von Tröpfchen aus der in die Mündungen der senkrechten Rohre überströmenden und aus den in Form dünner Strahlen aus den Bohrungen geringen Durchmessers in den Zwischenraum zwischen der Trennwand und der Querwand übertretenden flüssigen Lösung in den Anschluß für die Abfuhr gasförmiger Lösungskomponente und somit die Gefahr der Flüssigkeitsausscheidung in einem nachgeschalteten Kompressor zu minimieren, kann die Ausgestaltung in vorteilhafter Weiterbildung der Erfindung so getroffen sein, daß die in der Trennwand vorgesehenen Bohrungen geringen Durchmessers an ihrer Unterseite jeweils in ein dicht angeschlossenes Röhrchen münden, welche ihrerseits jeweils abgedichtet in einer Öffnung in einer weiteren, unmittelbar oberhalb der Ebene der oberen Stirnflächen der über die Querwand überstehenden senkrechten Rohre zwischen der Trennwand und der oberen horizontalen Querwand des Druckbehälters angeordneten horizontalen Trennungswand münden, welche ihrerseits zu den Mündungen der senkrechten Rohre ausgerichtet mit Durchgangsöffnungen versehen ist, deren lichter Durchlaßquerschnitt etwas kleiner als der lichte Durchlaßquerschnitt der senkrechten Rohre ist, wobei die Durchgangsöffnungen von jeweils einem von der Trennungswand in die Mündung des jeweils zugeordneten senkrechten Rohrs vortretenden Kragen begrenzt sind.

Beim Einsatz der Vorrichtung kann es bei bestimmten vorgegebenen Betriebsbedingungen zweckmäßig sein, den Entgaser bzw. Verdampfer oder den Resorber zwei- oder mehrstufig auszubilden, um die Leistungsziffer der Wärmepumpe zu verbessern. Diese speziellen Betriebsbedingungen sind dann gegeben, wenn die vorgegebene und die angestrebte Temperaturdifferenz wärmequellen- und nutzwärmeseitig sehr verschieden ist. Wenn beispielsweise die zulässige Absenkung der Temperatur in dem der Wärmequelle für die Entgasung entnommenen wärmeübertragenden Strömungsmedium im Vergleich zur angestrebten Erhöhung der Temperatur in dem die Nutzwärme aus dem Resorber abführenden Wärmeträgermedium klein ist, ist es zweckmäßig, den Entgaser zwei- oder mehrstufig auszuführen und jeder Entgaserstufe im Lösungskreislauf ein Drosselorgan vorzuschalten, wodurch der Druck in den Entgaserstufen stufenweise erniedrigt wird, und jeder Entgaserstufe entweder einen gesonderten Kompressor oder je eine oder mehrere Stufe(n) eines mehrstufigen Kompressors für die individuelle Druckerhöhung auf gleichen Enddruck der dem Resorber zuzuführenden gasförmig ausgetriebenen Komponente der Lösung zuzuordnen, wobei die Entgaserstufen bezüglich ihrer Durchströmung mit dem von der Wärmequelle gelieferten Wärmeträgermedium parallel geschaltet sind. Wenn andererseits die angestrebte oder zulässige Erhöhung der Temperatur in dem die Nutzenergie aus dem Resorber abführenden Wärmeträgermedium gering ist im Vergleich zur möglichen Temperaturabsenkung des von der Wärmequelle gelieferten wärmeübertragenden Strömungsmediums im Entgaser ist es zweckmäßig, den Resorber zwei- oder mehrstufig auszubilden und jeder Resorberstufe im Lösungskreislauf eine Lösungspumpe vorzuschalten, wodurch der Druck in den Resorberstufen stufenweise erhöht wird und jeder Resorberstufe entweder je einen gesonderten Kompressor oder je eine oder mehrere Stufe(n) eines mehrstufigen Kompressors vorzuschalten, in denen die im Entgaser gasförmig ausgetriebene Komponente der Lösung auf den individuellen Druck der jeweiligen Resorberstufe verdichtet wird, wobei die Resorberstufen bezüglich ihrer Durchströmung mit dem die anfallende Resorptionsenergie als Nutzenergie aus dem Resorber abführenden Wärmeträgermedium parallel geschaltet sind. Die erfindungsgemäße Vorrichtung kann in solchen Einsatzfällen, bei denen also die Entgasung bzw. Verdampfung oder die Absorption (Resorption) auf zwei oder mehreren unterschiedlichen Druckniveaus zwei- oder mehrstufig erfolgt, in vorteilhafter Weise so ausgebildet sein, daß zwei den unterschiedlichen Druckniveaus zugeordnete Vorrichtungen dadurch zu einer Baueinheit integriert werden, daß die den Vorrichtungen unterschiedlichen Druckniveaus zugeordneten Bauteile der oberen und der unteren Tasse bezüglich der senkrechten Mittelachse konzentrisch ineinandergebaut sind und so hermetisch gegeneinander abgedichtete, auf den unterschiedlichen Druckniveaus arbeitende Absorptions- oder Entgasungs- bzw. Verdampfungssysteme bilden, wobei das auf niedrigerem Druckniveau arbeitende System das auf höherem Druckniveau arbeitende System konzentrisch umgibt.

Die Erfindung ist in der folgenden Beschreibung mehrerer Ausführungsbeispiele in Verbindung mit der Zeichnung näher erläutert, und zwar zeigt:

Fig. 1     eine Seitenansicht eines ersten, als einstufiger Resorber in einem Zweistoff-Wärme-pumpen-System vorgesehenen Ausführungsbeispiels der erfindungsgemäßen Vorrichtung;

Fig. 2     eine Ansicht des in Figur 1 innerhalb des strichpunktierten Bereichs 2 liegenden oberen Teils der Vorrichtung im Längsmittelschnitt;

Fig. 3     eine Seitenansicht eines zweiten, als einstufiger Entgaser in einem Zweistoff-Wärmepumpen-System vorgesehenen Ausführungsbeispiels der erfindungsgemäßen Vorrichtung;

Fig. 4     eine Ansicht des in Figur 3 innerhalb des strichpunktierten Bereichs 4 liegenden oberen Teils der Vorrichtung im Längs mittelschnitt;

Fig. 5     eine vergrößerte Darstellung des in Fig. 4 innerhalb des strichpunktierten Bereichs 5 gelegenen Teils der Vorrichtung ;

Fig. 6    eine Ansicht, gesehen in Richtung des Pfeils 6 in Fig. 5 ;

Fig. 7    eine Seitenansicht eines dritten, als zweistufiger Resorber in einem Zweistoff-Wärmepumpen-System vorgesehenen Ausführungsbeispiels der erfindungsgemäßen Vorrichtung ;

Fig. 8    einen Längsmittelschnitt durch den in Figur 7 gezeigten zweistufigen Resorber ;

Fig. 9    eine Seitenansicht eines vierten, als zweistufiger Entgaser in einem Zweistoff-Wärmepumpen-System vorgesehenen Ausführungsbeispiels der erfindungsgemäßen Vorrichtung ; und

Fig. 10    einen Längsmittelschnitt durch die in Figur 9 gezeigte zweistufige Vorrichtung.

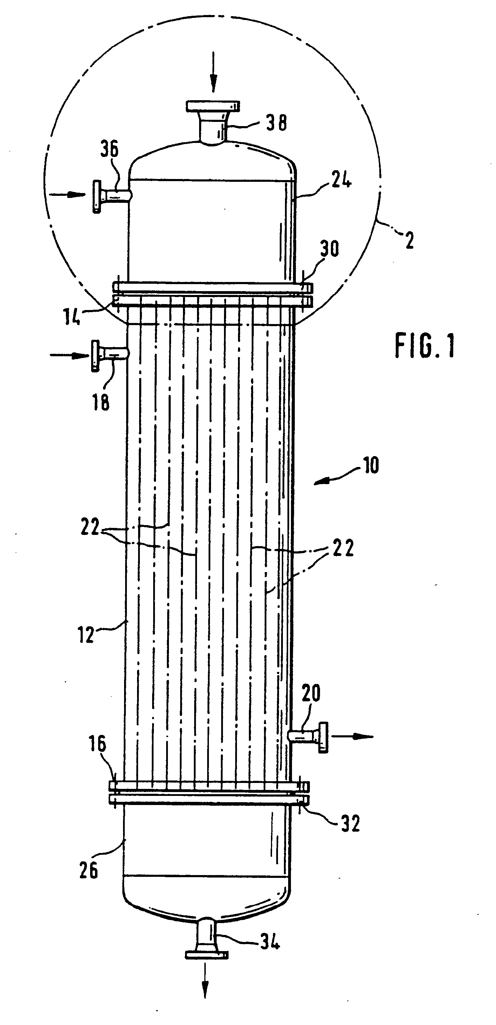

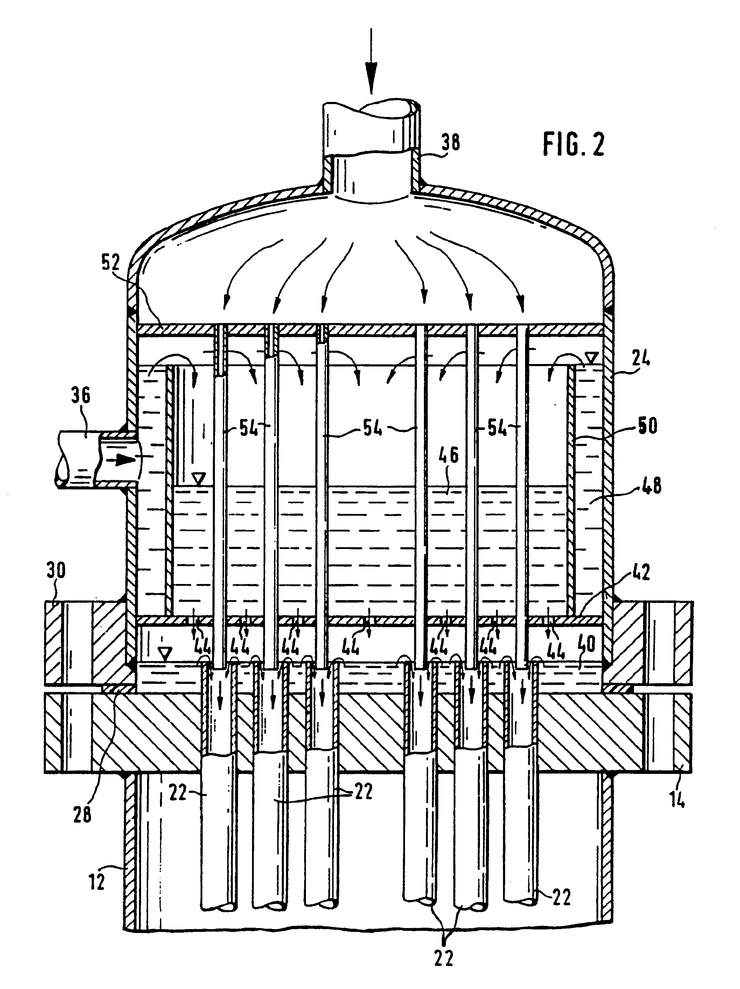

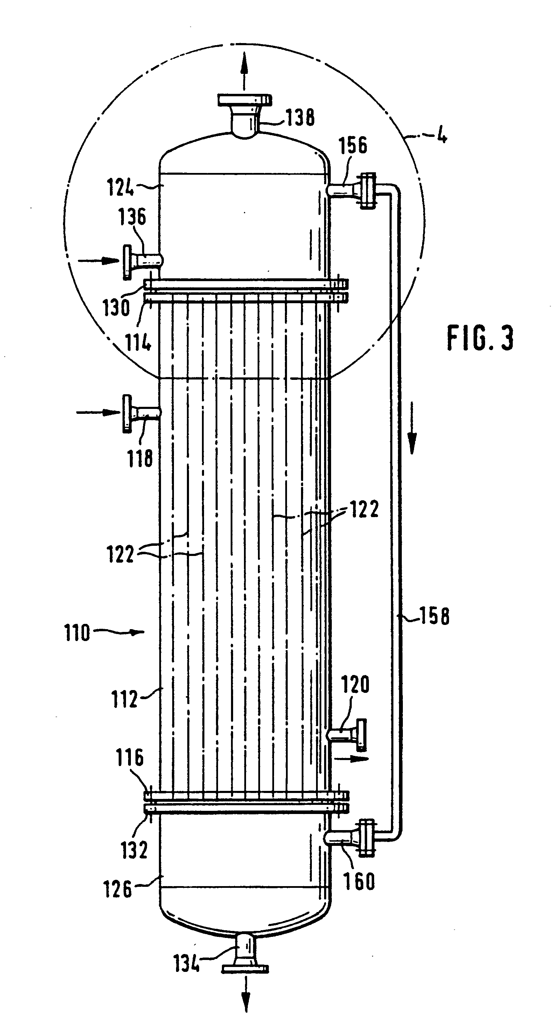

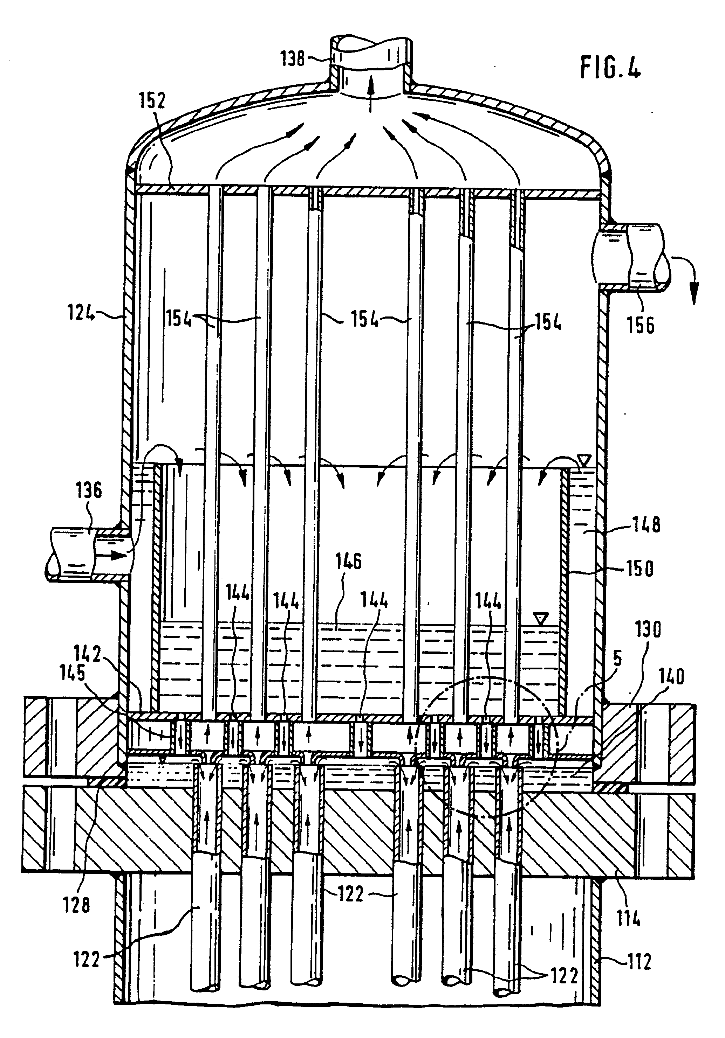

Das in den Figuren 1 und 2 gezeigte Ausführungsbeispiel der erfindungsgemäßen Vorrichtung ist ein in seiner Gesamtheit mit 10 bezeichneter Resorber, wie er beispielsweise in einer Zweistoff-Kompressions-Wärmepumpe Verwendung finden kann, um zuvor in einem nachstehend in Verbindung mit den Figuren 3 und 4 noch näher beschriebenen Entgaser bei niedrigem Druck unter Zufuhr von Wärme auf relativ niedrigem Temperaturniveau aus einer reichen Zweistoff-Lösung ausgetriebene, durch einen Kompressor auf einen höheren Druck gebrachte gasförmige Lösungskomponente wieder in der durch eine Pumpe ebenfalls auf einen höheren Druck gebrachten armen Lösung unter Abfuhr von Wärme auf höherem Temperaturniveau zu resorbieren (= absorbieren).

Zu diesem Zweck weist die Vorrichtung 10 einen langgestreckten zylindrischen, stehend angeordneten Druckbehälter 12 auf, der an seinem oberen und unteren Ende durch je eine Querwand 14 bzw. 16 druckdicht verschlossen ist und einen Einlaß 18 sowie einen Auslaß 20 aufweist, durch welchen ein Strömungsmedium ein- bzw. abführbar ist, welches die bei der Resorption der gasförmigen Lösungskomponente in der armen Lösung frei werdende Wärme aufnimmt und sich dabei aufheizt. Das Innere des Druckbehälters 12 wird von einer Vielzahl von voneinander beabstandeten parallelen senkrechten Rohren 22 durchsetzt, die in Figur 1 nur strichpunktiert angedeutet sind. In Figur 2 ist jedoch erkennbar, daß die Rohre 22 mit ihren oberen Enden abgedichtet durch die obere Querwand 14 hindurchgeführt sind. In gleicher Weise sind die unteren Enden der Rohre 22 durch die untere Querwand 16 abgedichtet hindurchgeführt zu denken. Auf dem oberen und dem unteren Ende des Behälters 12 ist jeweils eine mit der offenen Seite zur jeweiligen Querwand 14 bzw. 16 weisende Tasse 24, 26 durch eine Dichtung 28 abgedichtet aufgesetzt, wobei die äußeren Randbereiche der im Vergleich zum Durchmesser des Behälters 12 im Durchmesser vergrößerten Querwände 14 und 16 gleichzeitig als Befestigungsflansche dienen, welche mit jeweils einem an den Tassen 24, 26 angeschweißten ringförmigen Befestigungsflansch 30, 32 verschraubbar sind. Die untere Tasse 26 dient als Sammelraum für die nach der Resorption der gasförmigen Lösungskomponente wieder reiche Zweistofflösung, welche über den Auslaß 34 austritt.

Die arme Lösung wird in der Vorrichtung 10 über einen seitlich an der oberen Tasse 24 angesetzten Einlaß 36 und die gasförmige Lösungskomponente über einen mittig auf der Oberseite der Tasse 24 vorgesehenen Anschluß 38 zugeführt.

Die oberen Enden der Rohre 22 stehen in der in Figur 2 erkennbaren Weise jeweils um ein vorgegebenes Maß über die Oberfläche der oberen Querwand 14 vor, so daß sich innerhalb der Tasse 24 auf der oberen Querwand ein aus dem Einlaß 36 gespeister Überlaufsee 40 aus armer Lösung bilden kann, aus dem die arme Lösung erst dann in die Mündung der Rohre 22 übertreten und dann in Form jeweils eines dünnen Films auf deren Innenwänden in Abwärtsrichtung zur unteren Tasse 26 fließen kann, wenn sein Spiegel über die Höhe des Überstandes der Rohre 22 ansteigt. Zusätzlich strömt die von einem nicht gezeigten Kompressor über den Anschluß 38 in die Tasse 24 eingebrachte gasförmige Lösungskomponente im Gleichstrom zur armen Lösung in Abwärtsrichtung durch die Rohre 22, wobei sie in der armen Lösung resorbiert wird. Die dabei anfallende Resorptionswärme wird durch die Wandung der Rohre 22 hindurch in das den Druckbehälter 12 durchströmende Strömungsmedium übertragen, dessen Temperatur dabei auf ein Temperaturniveau ansteigt, welches die Verwendung als Nutzenergie ermöglicht.

Um ein gleichmäßiges Überströmen der armen Lösung aus dem Überlaufsee 40 in die Rohre 22 und dementsprechend eine Ausbildung gleicher Filmstärke und somit Strömungsmenge der armen Lösung innerhalb der Rohre 22 ebenso wie eine gleichmäßige Aufteilung und Einspeisung der gasförmigen Lösungs-komponente in die Rohre 22 gewährleisten, und so den Wirkungsgrad der Vorrichtung zu verbessern, ist die Ausgestaltung so getroffen. daß die arme Lösung nicht direkt aus dem Einlaß 36 in den Überlaufsee 40 strömt. Vielmehr ist über dem Überlaufsee 40 und unterhalb des Einlasses 36 eine horizontale Trennwand 42 in die Tasse 24 eingesetzt, die von einer Vielzahl von Bohrungen 44 durchsetzt wird, die in bezug auf die Mündungen der Rohre 22 in einem möglichst gleichmäßigen Bohrungsmuster angeordnet sind, wobei das Bohrungsmuster so gewählt ist, daß die Bohrungen 44 zu den Mündungen der Rohre 22 versetzt sind. Die Durchmesser der Bohrungen 44 sind bewußt so ein gewählt, daß sich über der Trennwand 42 ein zweiter, als "Beruhigungssee" zu bezeichnender See 46 aus armer Lösung aufstaut, aus dem die arme Lösung jeweils in dünnen Strahlen

EP 0 308 454 B1

in den Überlaufsee 40 übertritt, welche nicht zu einer Wirbelströmung oder zu einem Aufwühlen des Überlaufsees 40 führen. Die arme Lösung strömt nun aber auch nicht direkt aus dem Einlaß 36 in den Beruhigungssee 46, sondern zunächst in einen Ringraum 48, der von der Innenfläche der Wandung der Tasse 24 und der Außenfläche einer mit Abstand innerhalb der Tasse 24 angeordneten, auf der Trennwand 42 dicht aufgesetzten Ringwand 50 gebildet wird. Die Trennwand 42 ist im Bereich des ringförmigen Zwischenraums 48 geschlossen, d.h. weist dort keine Bohrungen 44 auf, so daß die über den Einlaß 36 zugeführte arie Lösung zwangsläufig nur über den oberen Rand der Ringwand 50 in den Beruhigungssee 46 übertreten kann, in dem es somit ebenfalls nicht zu Wirbelbildungen kommt, was die Ausbildung möglichst gleicher, durch die Bohrungen 44 in den Überlaufsee 40 übertretender Strahlen fördert.

Die über den Anschluß 38 zugeführte gasförmige Lösungs-komponente wird — ebenfalls abweichend vom Stand der Technik — nicht frei in die Tasse 24 eingeblasen, sondern mit Abstand oberhalb des Einlasses 36 und noch über dem oberen Rand der Ringwand 50 ist eine weitere Trennwand 52 eingesetzt, wobei der zwischen dieser Trennwand 52 und der unteren durchbohrten Trennwand 42 gebildete Zwischenraum von einer Anzahl von fluchtend zu den Rohren 22 ausgerichteten Rohr abschnitten 54 durchsetzt wird, und deren Durchmesser zumindest im Bereich ihres unteren, durch die untere Trennwand 42 hindurch bis in die offene Mündung der Rohre 22 geführten Endbereichs etwas geringer als der lichte Innendurchmesser der Rohre 22 ist. Die gasförmige Lösungskomponente wird den Rohren 22 also über die Rohr abschnitte 54 jeweils dosiert zugeführt, wobei durch die direkte Einführung in die Mündung der Rohre 22 verhindert wird, daß der Spiegel des Überlaufsees 40 durch strahlförmig auftreffende gasförmige Lösungsmittelkomponente aufgewühlt werden könnte.

Es hat sich gezeigt, daß durch die vorstehend geschilderte Ausgestaltung ein stabiler Betrieb des Resorbers mit hohem Wirkungsgrad erreicht wird, was auf die absolut gleichmäßige Zuführung der armen Lösung und Ausbildung gleichmäßiger Filmdicke in den Rohren 22 ebenso wie die gleichmäßige und — bei richtiger Auslegung — genau dosierte Zuführung der gasförmigen Lösungskomponente direkt in die Rohre 22 zurückgeführt wird.

Die Figuren 3 und 4 zeigen ein Ausführungsbeispiel der erfindungsgemäßen Vorrichtung 110, welches als Entgaser ausgestaltet ist, der zum Einsatz in der Zweistoff-Kompressions-Wärmepumpe vorgesehen sein möge, für welche auch die vorstehend in Verbindung mit den Figuren 1 und 2 beschriebene als Resorber dienende Vorrichtung 10 bestimmt ist. Da die Vorrichtung 110 und die Vorrichtung 10 bis auf die für die funktionellen Unterschiede ursächlichen Abwandlungen im wesentlichen gleichartig aufgebaut sind, und vergleichbaren Bauteilen beider Vorrichtungen in den Zeichnungen auch gleiche Bezugszeichen zugeordnet sind, denen im Falle des Entgasers 110 lediglich eine "1" vorangestellt ist, werden nachstehend nur die funktionswesentlichen Unterschiede und gegebenenfalls vorgesehene zusätzliche Funktionsteile beschrieben, während es im übrigen genügt, auf die vorangehende Beschreibung der Vorrichtung 10 zu verweisen.

Im Entgaser 110 wird aus der — aus dem Auslaß 34 der Vorrichtung 10 austretenden und über ein (nicht gezeigtes) Drosselorgan auf ein niedrigeres Druckniveau entspannten — durch den Einlaß 136 in die Tasse 124 eingespeisten reichen Lösung in den nachgeschalteten Rohren 122 unter Wärmezufuhr aus dem den Druckbehälter 112 durchfließenden Strömungsmedium gasförmige Lösungskomponente ausgetrieben, die in diesem Fall vom Kompressor der Wärmepumpe aus dem Anschluß 138 abgesaugt wird. Die gasförmige Lösungskomponente strömt in den Rohren 122 also im Gegenstrom zu der in Richtung auf die untere Tasse 126 zunehmend ärmer werdenden Lösung. Aus dem Auslaß 134 tritt dann also arme Lösung aus, die unter gleichzeitiger Druckerhöhung zum Einlaß 36 der Vorrichtung 10 gepumpt wird. Ein insbesondere in Figur 4 erkennbarer Unterschied der Vorrichtung 110 gegenüber der Vorrichtung 10 besteht darin, daß die Tasse 124 unter Vergrößerung der Höhe des Raums zwischen den Trennwänden 142 und 152 bzw. dem oberen Rand der Ringwand 150 und der Trennwand 152 ein größeres freies Innenvolumen aufweist, in welches in gewissem Umfange bereits gasförmige Lösungskomponente aus der zugeführten reichen Lösung ausgast, die über einen dicht unterhalb der Trennwand 152 in der Wandung der Tasse 124 vorgesehenen Auslaß 156 und eine nachgeschaltete Leitung 158 (Figur 3) in einen an der unteren Tasse 126 vorgesehenen zusätzlichen Anschluß 160 in die untere Tasse abgesaugt wird. Aus der Tasse 126 wird dieser Anteil der gasförmigen Lösungskomponente dann durch die Rohre 122 zusammen mit der dort ausgetriebenen gasförmigen Lösungs-komponente aus dem Anschluß 138 abgesaugt.

Bei Betrachtung der Figur 4 fällt dann als weiterer Unterschied gegenüber der Ausgestaltung der Vorrichtung 10 noch auf, daß die unteren Endabschnitte der Rohr abschnitte 154 infolge der entgegengesetzten Strömungsrichtung der gasförmigen Lösungskomponente nicht über die untere Trennwand 142 vortreten, sondern bündig mit dieser Trennwand abschließen.

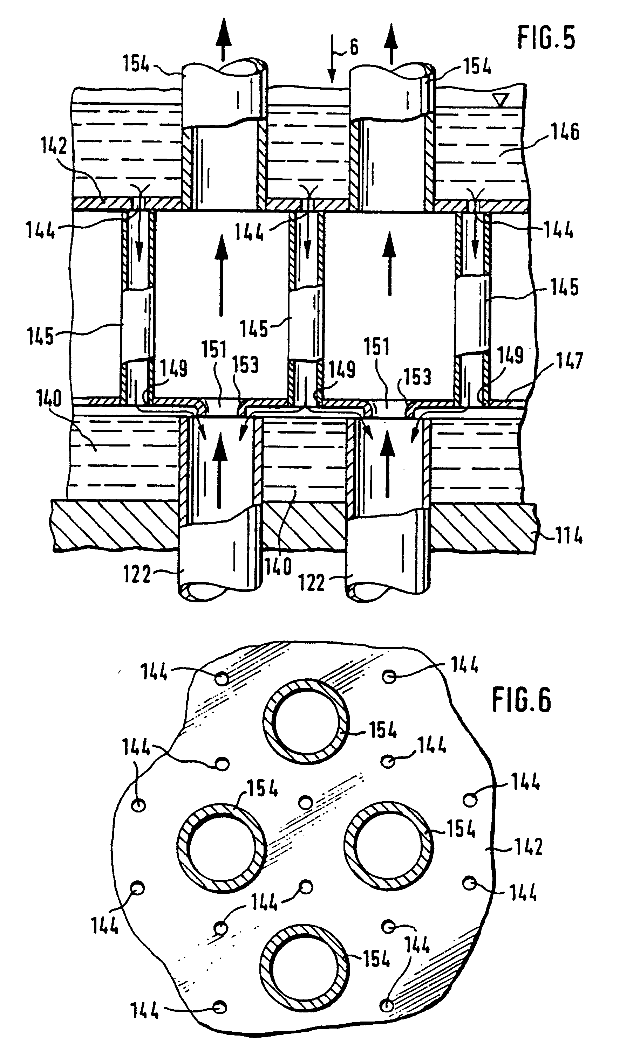

Wie insbesondere in den Figuren 5 und 6 ersichtlich ist, liegt ein weiterer Unterschied zur Ausgestaltung der Vorrichtung 10 darin, daß die Bohrungen 144, über welche die flüssige Lösung aus dem Beruhigungssee 146 in den überlaufsee 140 überströmt, nicht frei in den Zwischenraum zwischen der Trennwand 142 und der oberen Querwand 114 des Druckbehälters 112 münden, sondern in abgedichtet an der Unterseite der Trenn-

6

wand angeschlossenen Röhrchen 145, welche sich bis zu Öffnungen 149 in einer unmittelbär über den Stirnflächen der senkrechten Rohre 122—und somit unmittelbar über dem Spiegel des Überlaufsees 140—angeordneten horizontalen Trennungswand 147 erstrecken. Zu den Mündungen der senkrechten Rohre 122 ausgerichtet sind in der horizontalen Trennungswand 147 Durchgansöffnungen 151 so eingestanzt, daß jede Durchgängsöffnung einen in die Mündung des zugehörigen senkrechten Rohrs 122 vorspringenden umlaufenden Kragen 153 bildet, dessen Außendurchmesser kleiner als der Innendurchmesser der Mündung des zugeordneten Rohrs 122 ist, so daß also die flüssige Lösung über den zwischen dem Kragen und der Rohr-Mündung verbleibenden Ringspalt aus dem überlaufsee 140 in das jeweilige Rohr 122 übertreten kann. Es ist ersichtlich, daß durch diese Ausgestaltung das Mitreißen von flüssiger Lösungskomponente in Form feiner Tröpfchen aus dem zwischenraum zwischen der Querwand 114 und der Trennungswand 147 verhindert wird, wodurch die Einschaltung eines Flüssigkeitsabscheiders zwischen dem Entgaser und einem nachgeschalteten Kompressor vermieden bzw. zumindest die Größe eines solchen Abscheiders erheblich verringert wird.

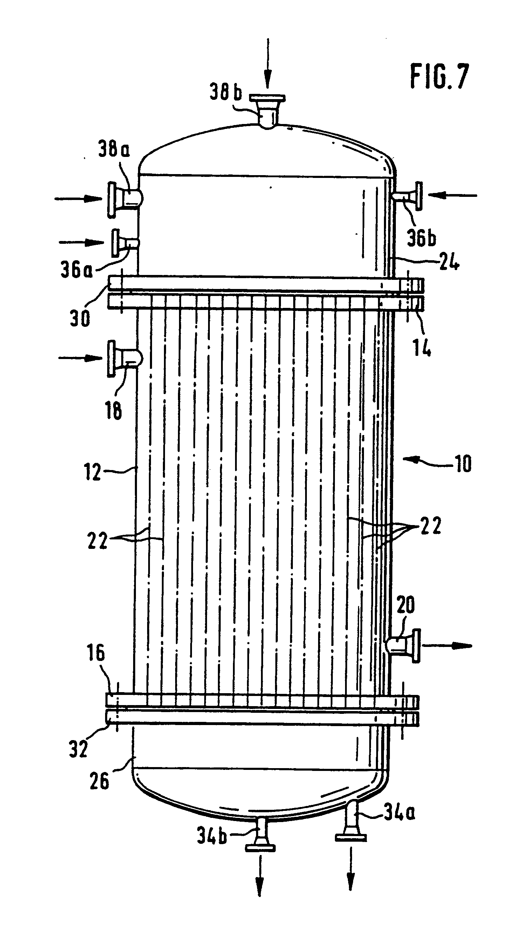

In den Figuren 7 bis 10 sind Weiterentwicklungen der in Verbindung mit den Figuren 1 bis 4 beschriebenen Vorrichtungen gezeigt, die den grundsätzlich gleichen Aufbau und auch die gleiche Arbeitsweise wie die beschriebenen Vorrichtungen 10 bzw. 110 haben, dabei aber zweistufig ausgebildet sind, d.h. zwei auf unterschiedlichem Druckniveau arbeitende, hintereinandergeschaltete Vorrichtungen 10 bzw. 110 ersetzen können. Da auch in diesem Fall wieder in der Zeichnung gleiche Funktionsteile mit gleichen Bezugszeichen wie bei den bereits beschriebenen Vorrichtungen versehen sind, werden nachstehend wieder nur die getroffenen Abwandlungen und Weiterbildungen im einzelnen beschrieben, wobei den Teile der Niederdruckstufe bezeichnenden Bezugszeichen "a" und den Teile der Hochdruckstufe bezeichnenden Bezugszeichen "b" angefügt ist.

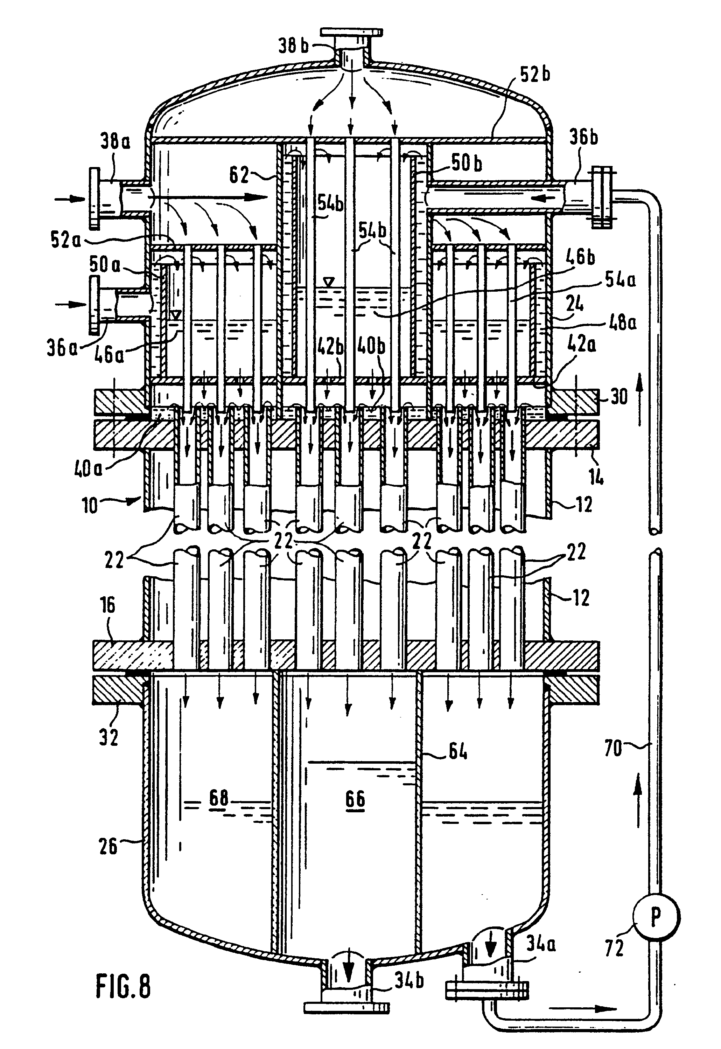

In den Figuren 7 und 8 ist eine als Resorber einsetzbare Vorrichtung 10 gezeigt, die sich — wie Figur 7 erkennen läßt — äußerlich von der in den Figuren 1 und 2 gezeigten einstufigen Vorrichtung 10 nur durch eine Verdoppelung der Einlässe 36a, 36b für arme Lösung, der Anschlüsse 38a, 38b für gasförmige Lösungskomponente und der Auslässe 34a, 34b für reiche Lösung unterscheidet. Die Änderungen des inneren Aufbaus sind in Figur 8 gezeigt. In der oberen Tasse 24 sind in Höhenrichtung versetzt zwei Trennwände 52a und 52b vorgesehen, von denen die untere, der Niederdruckstufe zugeordnete Trennwand 52a in der Höhe zwischen dem Einlaß 36a und und dem Anschluß 38a angeordnet ist und — abweichend von der kreisflächenförmigen oberen Trennwand 52b — in der Draufsicht nicht die Form einer vollen Kreisfläche, sondern einer Kreisringfläche mit einer mittigen kreisförmigen Öffnung hat. Innerhalb dieser kreisförmigen Öffnung ist eine zylindrische Ringwand 62 in die Tasse 24 eingesetzt, welche an ihrem unteren Ende druckdicht auf der Querwand 14 des Druckbehälters 12 aufgesetzt ist, und sich in Aufwärtsrichtung bis zur Trennwand 52b erstreckt, mit welcher sie ebenfalls druckdicht verbunden ist. Die untere durchbohrte Trennwand ist demzufolge durch die Ringwand 62 in zwei konzentrische Trennwandabschnitte unterteilt, von denen der innerhalb der Ringwand 62 liegende Trennwandabschnitt 42b die Form einer Kreisfläche mit einem dem lichten Innendurchmesser der Ringwand 62 entsprechenden Durchmesser hat, während der äußere Trennwandabschnitt 42a der Trennwand 52a entsprechend kreisringflächenförmig ist.

Aus Figur 8 ist erkennbar, daß der Niederdruck-Einlaß 36a und der Niederdruck-Anschluß 38a an das zwischen der Außenfläche der Ringwand 62 und der Innenfläche der Tasse 24 gebildete Niederdruck-System und der Einlaß 36b und der Anschluß 38b an das innerhalb der Ringwand 62 gebildete Hochdruck-System angeschlossen sind.

Auch in der unteren Tasse 26 ist eine Ringwand 64 angeordnet, die sich von der unteren Fläche der Querwand 16 bis zur inneren Fläche der kuppelartigen Abschlußwand der Tasse erstreckt und somit die Tasse in einen mittigen zylindrischen Hochdruck-Raum 66 und einen den Hochdruck-Raum konzentrisch umgebenden äußeren ringförmigen Niederdruck-Raum 68 unterteilt. Der Auslaß 34a für die in der Niederdruckstufe entstehende reiche Lösung ist demzufolge an den Niederdruck-Raum 68 und der Auslaß 34b für die in der Hochdruckstufe entstehende reiche Lösung an den Hochdruck-Raum 66 angeschlossen.

In Figur 8 ist dann noch ersichtlich, daß die in der Niederdruckstufe entstehende reiche Lösung aus dem Auslaß 34a über eine Leitung 70 mit eingeschalteter Pumpe 72 unter gleichzeitiger Druckerhöhung in den Einlaß 36b gefördert wird.

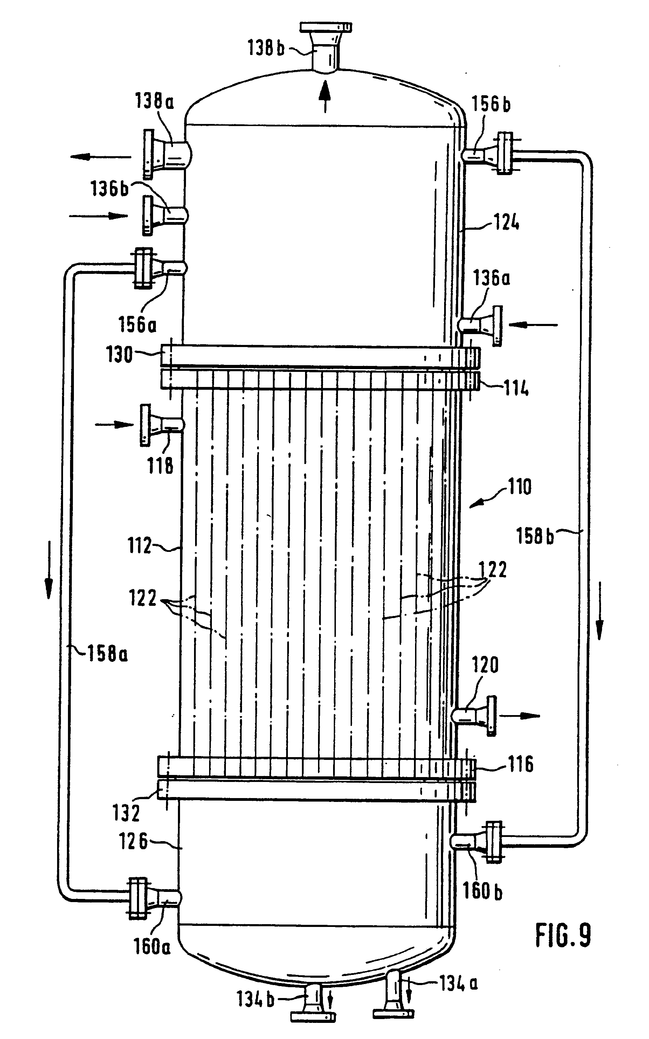

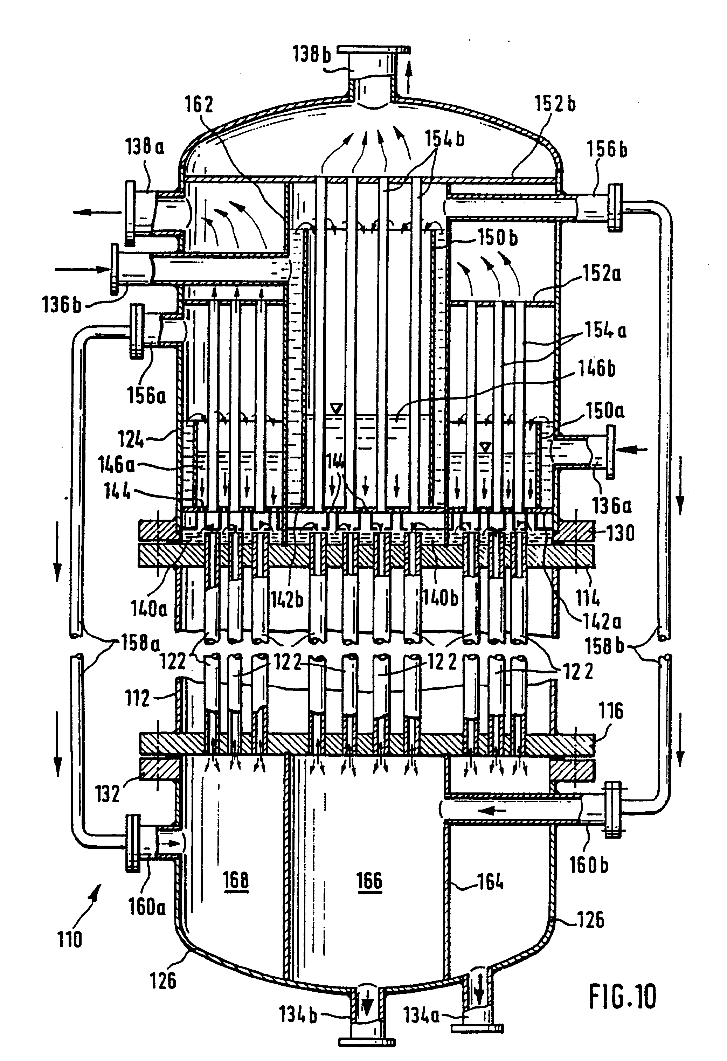

In den Figuren 9 und 10 ist schließlich noch die zweistufige Ausgestaltung einer als Entgaser betreibbaren zweistufigen Vorrichtung 110 veranschaulicht, bei welcher die beiden Stufen unterschiedlichen Arbeitsdrucks in der gleichen Weise wie bei der zweistufigen Vorrichtung 10 gemäß Fig. 8 durch eine Ringwand 162 in der oberen Tasse 124 und eine Ringwand 164 in der unteren Tasse 126 gebildet sind. Die Anordnung der Ein- und Auslässe für arme Lösung, gasförmige Lösungskomponente und reiche Lösung ist — unter Berücksichtigung der im Vergleich zum Resorber abweichenden Funktion — wiederum sinngemäß wie bei der zweistufigen Vorrichtung 10 getroffen.

Es ist ersichtlich, daß im Rahmen des Erfindungsgedankens weitere Abwandlungen und Weiterbildungen der beschriebenen Ausführungsbeispiele verwirklichbar sind. So können unter sinngemäßer Weiterbildung der in den Figuren 5 und 6 bzw. 7 und 8 gezeigten Vorrichtungen auch als Resorber bzw. Entgaser einsetzbare Vorrichtungen mit drei oder — erforderlichenfalls — noch mehr konzentrisch ineinander angeordneten Druckstufen geschaffen werden. Anstelle des Einsatzes als Resorber (Absorber) und Entgaser in Zweistoff-Systemen können sie auch als Kondensator und Verdampfer in Einstoff-Kompressions-Wärmepumpensystemen eingesetzt werden, die also beispielsweise mit Fluorkohlenwasserstoffen (Frigene) als Arbeitsmittel arbeiten.

## Patentansprüche

1. Vorrichtung zum Verdampfen von Flüssigkeiten bzw. Absorbieren oder Entgasen von Zwei- oder Mehrstoff-Lösungen mit einem allseitig geschlossenen, mit wenigstens je einem Ein-und einem Auslaß (18, 20 ; 118, 120) für die Durchströmung mit einem wärmeübertragenden Strömungsmedium versehenen stehenden Druckbehälter (12 ; 112) dessen Inneres von einer Vielzahl von voneinander beabstandeten parallelen senkrechten Rohren (22 ; 122) durchsetzt wird, deren Enden derart abgedichtet durch je eine den Druckbehälter (12 ; 112) bodenseitig und an der Oberseite abschließende horizontale Querwand (14, 16 ; 114, 116) hindurchgeführt sind, daß sie in einer bodenseitig und an der Oberseite druckdicht auf dem Druckbehälter angeordneten Tasse (26, 126 ; 24, 124) münden, wobei die oberen Enden der Rohre (22, 122) jeweils um das gleiche Maß über die Oberseite der oberen horizontalen Querwand (14 ; 114) in die Tasse (24 ; 124) vorstehen und an der oberen Tasse ein Einlaß (36 ; 136) für Flüssigkeit bzw. Lösung und ein Anschluß (38 ; 138) für die Zu- bzw. Abfuhr verdampfter Flüssigkeit bzw. gasförmiger Lösungskomponente und an der unteren Tasse (26 ; 126) ein Auslaß (34 ; 134) für Flüssigkeit bzw. flüssige Lösung vorgesehen ist, und mit Abstand über den oberen Mündungen der Rohre (54 ; 154) und unterhalb des Einlasses (36 ; 136) für die Flüssigkeit bzw. Lösung eine zur oberen Querwand (14 ; 114) des Druckbehälters parallele Trennwand (42 ; 142) in die obere Tasse (24 ; 124) eingesetzt ist, in welcher eine Vielzahl von zu den Mündungen der Rohre (22 ; 122) versetzten Bohrungen (44 ; 144) geringen Durchmessers und fluchtend zu den oberen Mündungen der Rohre (22 ; 122) Öffnungen vorgesehen sind, in die jeweils abgedichtet das unter Ende von sich in den oberhalb der Trennwand (42 ; 142) liegenden Raum der oberen Tasse (24 ; 124) erstreckenden Rohrabschnitten (54 ; 154) eingesetzt ist, und wobei auf der Oberseite der durchbohrten Trennwand (42 ; 142) eine im wesentlichen parallel zu und in geringem Abstand von der Innenfläche der Tasse (24 ; 124) angeordnete, ringsum geschlossene Ringwand (50 ; 150) dicht aufgesetzt ist, und in dem zwischen der Innenfläche der Tasse (24 ; 124) und der Außenfläche der Ringwand (50; 150) gelegenen ringförmigen Bereich der Trennwand (42 ; 142) keine Bohrungen vorgesehen sind, **dadurch gekennzeichnet**, daß mit Abstand oberhalb der durchbohrten Trennwand (42 ; 142) und oberhalb des Einlasses (36 ; 136) für die Flüssigkeit bzw. Lösung und unterhalb des Anschlusses (38 ; 138) für die Zu- oder Abfuhr verdampfter Flüssigkeit bzw. gasförmiger Lösungskomponente in die Tasse (24 ; 124) eine weitere Trennwand (52 ; 152) mit Öffnungen eingesetzt ist, in welche die oberen Enden der den zwischen den beiden Trennwänden gebildeten Zwischenraum durchsetzenden Rohrabschnitte (54 ; 154) abgedichtet eingesetzt sind ; und daß die Höhe der ringsum geschlossenen Ringwand (50 ; 150) geringer als der zwischen der weiteren Trennwand (52; 152) und der unteren durchbohrten Trennwand (42 ; 142) gemessenen lichten Höhe ist.

2. Als Absorber oder Resorber vorgesehene Vorrichtung nach Anspruch 1, dadurch gekennzeichnet, daß die den Zwischenraum zwischen den in der oberen Tasse (24) vorgesehenen Trennwänden (42 ; 52) durchsetzenden Rohrabschnitte (54) zumindest in ihrem unteren Endbereich einen Außendurchmesser haben, der kleiner als der lichte Innendurchmesser der über die obere Querwand (14) vortretenden Rohre (22) in deren Mündungsbereich ist, und daß die den Zwischenraum der Tasse (24) durchsetzenden Rohrabschnitte (54) durch die untere durchbohrte Trennwand (42) hindurch bis in den jeweils mit ihnen fluchtenden Mündungsbereich der von der oberen Querwand (14) vortretenden Rohre (22) geführt sind.

3. Als Entgaser oder Verdampfer vorgesehene Vorrichtung nach Anspruch 1, dadurch gekennzeichnet, daß die obere Tasse (124) in ihrem unmittelbar unter der oberen Trennwand (152) gelegenen Bereich mit einem zusätzlichen Auslaß (156) versehen ist, der über eine Leitung (158) mit einem weiteren Anschluß (160) an der unteren Tasse (126) verbunden ist.

4. Vorrichtung nach Anspruch 3, dadurch gekennzeichnet, daß die in der Trennwand (142) vorgesehenen Bohrungen (144) geringen Durchmessers an ihrer Unterseite jeweils in ein dicht angeschlossenes Röhrchen (145) münden, welche ihrerseits jeweils abgedichtet in einer Öffnung (149) in einer weiteren, unmittelbar oberhalb der Ebene der oberen Stirnflächen der über die Querwand (114) überstehenden senkrechten Rohre (122) zwischen der Trennwand (142) und der oberen horizontalen Querwand (114) des Druckbehälters (112) angeordneten horizontalen Trennungswand (147) münden, welche ihrerseits zu den Mündungen der senkrechten Rohre (122) ausgerichtet mit Durchgangsöffnungen (151) versehen ist, deren lichter Durchlaßquerschnitt etwas kleiner als der lichte Durchlaßquerschnitt der senkrechten Rohre (122) ist, wobei die Durchgangsöffnungen von jeweils einem von der Trennungswand (147) in die Mündung des jeweils zugeordneten senkrechten

EP 0 308 454 B1

Rohrs (122) vortretenden Kragen (153) begrenzt sind.

5. Vorrichtung nach einem der Ansprüche 1 bis 4, welche zum Einsatz in Prozessen dient, bei denen die Absorption oder Entgasung bzw. Verdampfung auf zwei oder mehreren unterschiedlichen Druckniveaus erfolgt, dadurch gekennzeichnet, daß wenigstens zwei auf den unterschiedlichen Druckniveaus arbeitende derartige Vorrichtungen dadurch zu einer Baueinheit integriert sind, daß die den unterschiedlichen Druckniveaus zugeordneten Bauteile der oberen und der unteren Tasse (24, 26 ; 124, 126) bezüglich der senkrechten Mittelachse der Vorrichtung konzentrisch ineinandergebaut sind und so hermetisch gegeneinander abgedichtete, auf den unterschiedlichen Druckniveaus arbeitende Absorptions- oder Entgasungs- bzw. Verdampfungssysteme (a ; b) bilden, wobei das auf niedrigerem Druckniveau arbeitende System (a) das auf höherem Druckniveau arbeitende System (b) jeweils konzentrisch umgibt.


## Claims

1. Apparatus for evaporating liquids or for absorbing or degassing solutions of two or more substances, having an upright, fully enclosed pressure tank (12 ; 112) which is provided with at least one inlet and one outlet (18, 20 ; 118, 120) to carry a flow of a heat-transferring fluid, and whose interior contains a plurality of parallel vertical tubes (22 ; 122) spaced apart from one another, whose ends are brought sealingly through a horizontal transverse wall (14, 114) closing off the bottom and through another transverse wall (16, 116) closing off the top of the pressure tank (12 ; 112), in such a manner that the ends open into a bell disposed in a pressure-tight manner, one (26, 126) at the bottom and one (24, 124) at the top of the pressure tank, the upper ends of the tubes (22, 122) projecting into the bell each by the same amount above the top of the upper horizontal transverse wall (14 ; 114), and on the upper bell an inlet (36 ; 136) is provided for the fluid or solution and a connection (38 ; 138) for the infeed and outfeed, respectively, of evaporated fluid or of gaseous solution component, and on the bottom bell (26 ; 126) there is provided an outlet (34 ; 134) for fluid or for liquid solution, and at a distance above the upper mouths of the tubes (54 ; 154)[1] and below the inlet (36 ; 136) for the fluid or solution a partition wall (42 ; 142) parallel to the upper transverse wall (14 ; 114) of the pressure tank is inserted into the upper bell, and in it a plurality of bores (44 ; 144) of small diameter offset from the mouths of the tubes (22 ; 122) are provided, and openings are provided in alignment with the upper mouths of the tubes (22 ; 122), and into them are inserted sealingly the bottom ends of tube sections (54 ; 154) running into the chamber of the upper bell (24 ; 124) that is above the partition wall (42 ; 142), and wherein on the top side of the perforated partition wall (42 ; 142) a circumferentially continuous annular wall (50 ; 150) substantially parallel to and at a slight distance away from the inner surface of the bell (24 ; 124) is sealingly superimposed, and in the annular area of the partition wall (42 ; 142) between the inner surface of the bell (24 ; 124) and the outer surface of the annular wall (50 ; 150) no bores are provided, characterized in that, at a distance above the perforated partition wall (42 ; 142) and above the inlet (36 ; 136) for the liquid or solution, and below the connection (38 ; 138) for the infeed or outfeed of evaporated liquid or gaseous solution component an additional partition wall (52 ; 152) having openings is inserted into the bell (24 ; 124), into which the upper ends of the tube sections (54 ; 154) passing through the intermediate space formed between the two partition walls are sealingly inserted ; and that the height of the circumferentially continuous annular wall (50 ; 150) is less than the clear height measured between the additional partition wall (52 ; 152) and the bottom perforated partition wall (42 ; 142).

2. Apparatus in accordance with claim 1, provided as an absorber or resorber, characterized in that the tube sections (54) passing through the intermediate space between the partition walls (42 ; 52) provided in the upper bell (24) have, at least in their bottom end area, an outside diameter that is smaller than the free inside diameter of the tubes (22) projecting above the upper transverse wall (14) at their mouth area, and that the tube sections (54) passing through the intermediate space of the bell (24) are carried through the bottom perforated partition wall (42) all the way into the mouth area, aligned with them, of each of the tubes (22) projecting from the upper transverse wall (14).

3. Apparatus in accordance with claim 1, provided as a degasser or evaporator, characterized in that the upper bell (124) is provided in its area situated immediately below the upper partition wall (152) with an additional outlet (156) which is connected by a conduit (158) to an additional connection (160) at the bottom bell (126).

4. Apparatus according to claim 3, characterized in that the bores of small diameter provided in the partition wall (142) open at their bottom each into one of closely connected tubes (145) which in turn open sealingly in an opening (149) in an additional horizontal dividing wall (147) which is disposed immediately above the plane of the upper end faces of the vertical tubes (122) projecting above the transverse wall (114) between the partition wall (142) and the upper horizontal transverse wall (114) of the pressure tank (112), and which is provided with through openings (151) which are aligned with the mouths of the vertical tubes (122), and whose clear passage cross section is slightly smaller than the clear passage cross section of a collar (153) projecting from the dividing wall (147) into the mouth of the associated vertical tube (122).

5. Apparatus according to any one of claims 1 to 4 which serves for use in processes in which adsorption or outgassing or evaporation takes place at two or more different pressure levels, characterized in that at least two such apparatus operating at different pressure levels are integrated in one unit by the fact that the components of the upper and lower bell (24, 26 ; 124, 126) associated with the various pressure levels are built concentrically one inside the other with respect to the vertical central axis of the apparatus and thus form absorption or degassing or evaporating systems (a ; b) operating at the different pressure levels and are thus hermetically sealed off from one another, the system (a) operating at lower pressure level concentrically surrounding in each case the system (b) operating at higher pressure level.

## Revendications

1. Appareil de vaporisation de liquides ou d'absorption ou de dégazage de solutions à deux ou plus de deux constituants, comportant un récipient à pression vertical (12 ; 112) fermé de tous les côtés, pourvu d'au moins une entrée et d'au moins une sortie (18, 20 ; 118, 120) pour sa traversée par un fluide transmetteur de chaleur, et dont l'intérieur est traversé par un grand nombre de tuyaux verticaux parallèles espacés (22 ; 122) dont les extrémités traversent de manière étanche des parois transversales horizontales (14, 16 ; 114, 116) fermant le récipient sous pression (12 ; 112) l'une du côté du fond et l'autre sur le côté supérieur, et traversant ces parois de façon telle qu'elles débouchent dans des tasses (26, 126 ; 24, 124) montées de manière étanche sur le récipient à pression l'une du côté du fond et l'autre sur le côté supérieur, les extrémités supérieures des tuyaux (22 ; 122) saillant toutes de la même quantité dans la tasse (24 ; 124) au-dessus de la face supérieure de la paroi transversale horizontale supérieure (14 ; 114) et, sur la tasse supérieure, sont prévues une entrée (36 ; 136) pour liquide ou solution et un orifice (38 ; 138) pour l'amenée ou l'évacuation de liquide vaporisé ou de constituant gazeux de solution et sur la tasse inférieure (26 ; 126), est prévue une sortie (34 ; 134) pour liquide ou solution liquide et, à une certaine distance au-dessus des orifices supérieurs des tuyaux (22 ; 122) et au-dessous de l'entrée (36 ; 136) pour le liquide ou la solution est montée dans la tasse supérieure (24 ; 124) une cloison (42 ; 142) parallèle à la paroi transversale supérieure (14 ; 114) du récipient à pression et dans laquelle sont prévus un grand nombre de trous (44 ; 144) de faible diamètre décalés par rapport aux orifices des tuyaux (22 ; 122) et des ouvertures situées en face des orifices supérieurs des tuyaux (22 ; 122) dans chacune desquelles est montée de manière étanche l'extrémité inférieure de tronçons de tuyau (54 ; 154) s'étendant dans l'espace de la tasse supérieure (24 ; 124) situé au-dessus de la cloison (42 ; 142) et sur la face supérieure de la cloison perforée (42 ; 142), étant montée de manière étanche une paroi annulaire (50 ; 150) fermée tout autour placée sensiblement parallèlement à la face intérieure de la tasse (24 ; 124) et à faible distance de cette face et, dans la partie annulaire de la cloison (42 ; 142) située entre la face intérieure de la tasse (24 ; 124) et la face extérieure de la paroi annulaire (50 ; 150) n'étant pas prévu de trous, caractérisé par le fait qu'à une certaine distance au-dessus de la cloison perforée (42 ; 142) et au-dessus de l'entrée (36 ; 136) pour le liquide ou la solution et au-dessous de l'orifice (38 ; 138) pour l'amenée ou l'évacuation de liquide vaporisé ou de constituant gazeux de solution, est montée dans la tasse (24 ; 124) une autre cloison (52 ; 152) pourvue d'ouvertures dans lesquelles sont montées de manière étanche les extrémités supérieures des tronçons de tuyau (54 ; 154) traversant l'espace situé entre les deux cloisons, et que la hauteur de la paroi annulaire fermée tout autour (50 ; 150) est inférieure à la hauteur comprise entre cette autre cloison (52 ; 152) et la cloison inférieure perforée (42 ; 142).

2. Appareil selon la revendication 1 prévu comme absorbeur ou résorbeur, caractérisé par le fait que les tronçons de tuyau (54) traversant l'espace entre les cloisons (42 ; 52) prévues dans la tasse supérieure (24) ont, au moins dans leur partie extrême inférieure, un diamètre extérieur inférieur au diamètre intérieur qu'ont dans la zone de leur orifice les tuyaux (22) qui dépassent au-dessus de la paroi transversale supérieure (14), et que les tronçons de tuyau (54) traversant l'espace intermédiaire de la tasse (24) traversent la cloison inférieure perforée (42) et entrent dans la zone de l'orifice, alignée avec eux, des tuyaux (22) qui saillent de la paroi transversale supérieure (14).

3. Appareil selon la revendication 1 prévu comme dégazeur ou vaporiseur, caractérisé par le fait que la tasse supérieure (124) est, dans sa zone située immédiatement au-dessous de la cloison supérieure (152), pourvue d'une sortie supplémentaire (156) qui est reliée par une conduite (158) à un autre orifice (160) prévu sur la tasse inférieure (126).

4. Appareil selon la revendication 3, caractérisé par le fait que les trous (144) de faible diamètre prévus dans la cloison (142) débouchent chacun sur le dessous dans un petit tuyau joint de manière étanche (145) qui lui-même débouche dans une ouverture (149) d'une autre cloison horizontale (147) placée entre la cloison (142) et la paroi transversale horizontale supérieure (114) du récipient à pression (112) immédiatement au-dessus du plan des faces frontales supérieures des tuyaux verticaux (122) dépassant au-dessus de la paroi transversale (114), laquelle autre cloison horizontale (147) est elle-même pourvue, en face des orifices des tuyaux verticaux (122), d'ouvertures de passage (151) dont la section de libre passage est un peu plus petite que celle des tuyaux verticaux (122), ces ouvertures de passage étant limitées chacune par une collerette (153) saillant de la cloison (147) et entrant dans l'orifice du tuyau vertical (122) associé.

5. Appareil selon l'une des revendications 1 à 4, destiné à être utilisé dans des processus dans lesquels l'absorption ou le dégazage, ou la vaporisation, est fait(e) à deux ou plus de deux niveaux de pression différents, caractérisé par le fait qu'au moins deux appareils de ce type fonctionnant aux niveaux de pression différents sont intégrés en un ensemble par le fait que les éléments de la tasse supérieure et de la tasse inférieure (24, 26 ; 124, 126) affectés aux niveaux de pression différents sont montés l'un dans l'autre coaxialement relativement à l'axe vertical de l'appareil et forment ainsi des systèmes d'absorption ou de dégazage, ou de vaporisation, (a ; b) isolés les uns des autres et fonctionnant aux niveaux de pression différents, le système (a) fonctionnant au bas niveau de pression entourant dans chaque cas coaxialement le système (b) fonctionnant au haut niveau de pression.

FIG.1

FIG. 2

FIG. 3

FIG.4

FIG.5

FIG.6

16

FIG.7

FIG.8

FIG.9

FIG.10